(19) **Europäisches Patentamt**
**European Patent Office**
**Office européen des brevets**

(11) **EP 4 344 914 A1**

(12) # EUROPEAN PATENT APPLICATION
published in accordance with Art. 153(4) EPC

(43) Date of publication:
**03.04.2024 Bulletin 2024/14**

(21) Application number: **21961959.0**

(22) Date of filing: **29.10.2021**

(51) International Patent Classification (IPC):
**B60H 1/32** *(2006.01)* **B60H 1/00** *(2006.01)*
**B60L 58/26** *(2019.01)* **H01M 10/613** *(2014.01)*
**H01M 10/625** *(2014.01)* **F25B 49/02** *(2006.01)*
**F24F 11/46** *(2018.01)* **F24F 5/00** *(2006.01)*

(52) Cooperative Patent Classification (CPC):
**B60H 1/00; B60H 1/32; B60L 58/26; F24F 5/00;**
**F24F 11/46; F25B 49/02; H01M 10/613;**
**H01M 10/625**

(86) International application number:
**PCT/CN2021/127730**

(87) International publication number:
**WO 2023/070607 (04.05.2023 Gazette 2023/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Zhejiang Geely Holding Group Co., Ltd.**
**Hangzhou, Zhejiang 310051 (CN)**

• **Geely Automobile Research Institute**
**(Ningbo) Co., Ltd**
**Ningbo, Zhejiang 315336 (CN)**

(72) Inventor: **LI, Shuangqi**
**Hangzhou, Zhejiang 310051 (CN)**

(74) Representative: **Barker Brettell LLP**
**100 Hagley Road**
**Edgbaston**
**Birmingham, West Midlands B16 8QQ (GB)**

(54) **VEHICLE REFRIGERATION CONTROL METHOD AND APPARATUS, AND DEVICE, MEDIUM, AND PROGRAM PRODUCT**

(57)    A vehicle refrigeration control method and apparatus, a device, a medium and a program product. A temperature and a change rate of the temperature of a battery in a target vehicle are monitored in real time; then a refrigeration requirement level of the battery is determined according to the temperature and the change rate; a refrigeration mode to be entered is determined according to a current refrigeration requirement level of the battery, when it is detected that a passenger compartment and the battery of the target vehicle both have refrigeration requirements at the same time; and control instructions of respective target control objects are determined according to the refrigeration mode, the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase. The technical problem of how to allocate and control the refrigeration capacity of a new energy vehicle is solved, thus achieving the technical effect of flexibly allocating the total refrigeration performance of the vehicle under the premise of ensuring the comfort of the passenger compartment first, to guarantee the refrigeration of the battery effectively.

| | |
|---|---|
| Monitoring a temperature and a change rate of the temperature of a battery in a target vehicle in real time | S201 |
| Determining a refrigeration requirement level of the battery according to the temperature and the change rate of the battery | S202 |
| Determining a refrigeration mode to be entered according to a current refrigeration requirement level of the battery, when it is detected that the passenger compartment and the battery of the target vehicle both have refrigeration requirements at the same time | S203 |
| Determining control instructions of respective target control objects according to the refrigeration mode | S204 |

FIG. 2

EP 4 344 914 A1

**Description**

**TECHNICAL FIELD**

The present application relates to the field of new energy vehicle technologies, and in particular, to a vehicle refrigeration control method and apparatus, a device, a medium and a program product.

**BACKGROUND**

With the development of vehicle technologies, new energy vehicles have become the main trend of future vehicle development. Although there are many solutions in the field of traditional vehicles for the control of the environment in the vehicle, new challenges will be faced in new energy vehicles, because new energy vehicles introduce high-power drive motors and large-capacity batteries, which will have a new impact on an existing vehicle heat management.

When refrigeration is required for a battery and a passenger compartment of a new energy vehicle, the refrigeration performance of the system may not be able to simultaneously and timely meet the refrigeration requirements of both of the battery and the passenger compartment. How to realize allocation and control of the refrigeration performance for both of the battery and the passenger compartment have become an urgent technical problem to be solved for new energy vehicles.

**SUMMARY**

A purpose of the present application is to provide a vehicle refrigeration control method, which solves the technical problem of how to allocate and control the refrigeration performance of new energy vehicles.

In a first aspect, the present application discloses a vehicle refrigeration control method, including:

monitoring a temperature and a change rate of the temperature of a battery in a target vehicle in real time;
determining a refrigeration requirement level of the battery according to the temperature and the change rate;
determining a refrigeration mode to be entered according to a current refrigeration requirement level of the battery, when it is detected that a passenger compartment and the battery of the target vehicle both have refrigeration requirements at the same time;
determining control instructions of respective target control objects according to the refrigeration mode;
where the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase.

Based on the above technical content, when the passenger compartment and the battery both have refrigeration requirements at the same time, it is decided, according to the refrigeration requirement level of the battery, whether to first refrigerate the passenger compartment or to first refrigerate the battery in the single-mode, and then apply the dual-mode for refrigeration. In this way, the refrigeration process is divided into two phases. In the first phase, the refrigeration performance is concentrated on the party with the most urgent current requirement, and the judgment criterion is that when the refrigeration requirement of the battery is non-emergency, the refrigeration requirement of the comfort of the passenger compartment is given priority. After the first phase, the total refrigeration requirement has also declined to be within an upper limit of a refrigeration capacity of the target vehicle, and the dual-mode refrigeration can be turned on to meet the refrigeration requirements of the both at the same time. The technical effect of not only ensuring the comfort of the passenger compartment, but also ensuring the safety of the system is achieved. The problem of allocating and controlling the refrigeration performance is well solved.

In an implementation, the single-mode phase includes a passenger compartment refrigeration mode, where determining the refrigeration mode to be entered according to the current refrigeration requirement level of the battery includes:

entering the passenger compartment refrigeration mode and monitoring a first air outlet temperature in real time, when the refrigeration requirement level of the battery is a non-emergency state, where the first air outlet temperature includes an air outlet temperature at a location where an internal heat exchanger is located;
entering the dual-mode phase, when a first temperature difference between the first air outlet temperature and a first target temperature is less than or equal to a first temperature difference threshold, or a first running time of the passenger compartment refrigeration mode is greater than or equal to a first preset time.

If the refrigeration requirement level of the battery is not high, then on the principle of giving priority to the comfort of the passenger compartment, the refrigeration capacity is allocated to the passenger compartment, so that the passenger compartment can be cooled quickly. However, due to the fact that the refrigeration requirement of the battery also needs to be taken into account, otherwise the refrigeration requirement level of the battery continues to rise, causing safety hazards of the system, so it is necessary to control the individual refrigeration time on the passenger compartment. At the same time, controlling the individual refrigeration time of the passenger compartment can also avoid the safety problem of irreversible damage caused by the impossibility of performing timely refrigeration for the battery since the control falls into an infinite loop when certain unforeseen factors cause the temperature of the passenger compartment to never reach the preset target.

In an implementation, when the refrigeration requirement level of the battery is the non-emergency state, sending a close instruction to a first electronic expansion valve after entering the passenger compartment refrigeration mode, where the first electronic expansion valve is installed at a refrigerant input end of a multi-system heat exchanger, and the multi-system heat exchanger is configured for heat exchange between a heat pump system and a cooling liquid circulation system;

determining control instructions of respective target control objects according to the refrigeration mode, includes:
determining a first closed-loop control instruction of a compressor according to the first air outlet temperature and a first closed-loop control model;
determining a second closed-loop control instruction of a second electronic expansion valve according to a supercooling degree of a first preset position and a second closed-loop control model, where the first preset position includes an input end of an external heat exchanger, and the second electronic expansion valve is installed at an input end of the internal heat exchanger.

In an implementation, when the refrigeration requirement level of the battery is the non-emergency state, determining control instructions of respective target control objects according to the refrigeration mode after entering the dual-mode phase includes:

determining an opening degree control instruction of the first electronic expansion valve according to the refrigeration requirement level, the first air outlet temperature, and the target temperature;
determining a third closed-loop control instruction of the compressor according to the first air outlet temperature and a third closed-loop control mode;
determining a fourth closed-loop control instruction of the second electronic expansion valve according to a supercooling degree of the first preset position and a fourth closed-loop control model.

In an implementation, the opening degree control instruction includes a valve opening rate and a valve closing rate, the refrigeration requirement level is positively correlated with the valve opening rate, and the refrigeration requirement level is inversely correlated with the valve closing rate.

Optionally, the opening degree control instruction includes an upper limit value of an opening degree, and the refrigeration requirement level is positively correlated with the upper limit value of the opening degree.

When the refrigeration level of the battery is low, that is, the battery is in a non-emergency state, a control method following the principle of ensuring the comfort of the passenger compartment is given priority. In an individual refrigeration phase of the passenger compartment, the compressor is configured to control an air outlet temperature of an evaporator; and an electronic expansion valve (i.e., the first electronic expansion valve) in front of the evaporator (i.e., the internal heat exchanger) controls a supercooling degree of an external condenser (i.e., the external heat exchanger), thus improving the stability and safety of the entire system. At the same time, in order to concentrate the refrigeration performance on the heat pump system, the electronic expansion valve (i.e., the second electronic expansion valve) at the refrigerant input end of the multi-system heat exchanger (i.e., the Chiller refrigerator) is closed. After entering the phase in which the passenger compartment and the battery are refrigerated at the same time, the compressor controls an air outlet temperature of the evaporator, the electronic expansion valve in front of the evaporator controls the supercooling degree of the external condenser, and the electronic expansion valve at the refrigerant input end of the Chiller refrigerator monitors a difference between the air outlet temperature of the evaporator and a target air outlet temperature of the evaporator; a valve is opened slowly, or a valve is closed slowly, or the opening degree is maintained. In this way, through the cooperation of the compressor and the second electronic expansion valve, the priority allocation for refrigeration of the passenger compartment is completed, thereby ensuring the comfort experience of the user.

In an implementation, the single-mode phase includes a battery refrigeration mode, where determining the refrigeration mode to be entered according to the current refrigeration requirement level of the battery includes:

entering the battery refrigeration mode and monitoring a cooling liquid temperature at a first position in real time, when the refrigeration requirement level is an emergency state, where the first position includes an entrance of a battery cooling pipeline in a battery cooling circuit, and the battery cooling circuit is included in a cooling liquid circulation system;

entering the dual-mode phase, when a second temperature difference between the cooling liquid temperature and a second target temperature is less than or equal to a second temperature difference threshold, or a second running time of the battery refrigeration mode is greater than or equal to a second preset time.

In an implementation, when the refrigeration requirement level is an emergency state, determining control instructions of respective target control objects according to the refrigeration mode after entering the battery refrigeration mode includes:

determining a fifth closed-loop control instruction of the compressor according to the cooling liquid temperature and a fifth closed-loop control model;

determining a sixth closed-loop control instruction of the first electronic expansion valve according to a supercooling degree of a second preset position and a sixth closed-loop control model, where the second preset position includes the refrigerant input end of the multi-system heat exchanger;

determining a preset opening degree instruction of the second electronic expansion valve according to an air inlet temperature, a target air outlet temperature and an air volume of a blower, where the preset opening degree instruction is used for fixedly setting an opening degree of the second electronic expansion valve to be a preset opening degree, the air inlet temperature includes a temperature of an air inlet side at a location where an internal heat exchanger is located, the target air outlet temperature is a preset temperature of an air outlet side at a location where the internal heat exchanger is located.

In an implementation, when the refrigeration requirement level is an emergency state, the determining the control instructions of the respective target control objects according to the refrigeration mode after entering the dual-mode phase includes:

simultaneously monitoring the second temperature difference and a change rate of the cooling liquid temperature in real time to determine an opening degree adjustment instruction of the second electronic expansion valve, on the basis of the fifth closed-loop control instruction, the sixth closed-loop control instruction, and the preset opening degree instruction.

In an implementation, the monitoring the second temperature difference and the change rate of the cooling liquid temperature in real time to determine the opening degree adjustment instruction of the second electronic expansion valve includes:

decreasing the opening degree of the second electronic expansion valve in a first preset manner, when the second temperature difference is greater than the second temperature difference threshold and the second temperature difference is less than or equal to a preset temperature difference upper limit, and the change rate is less than a first rate threshold.

Optionally, keeping the opening degree of the second electronic expansion valve degree unchanged, when the change rate is greater than or equal to the first rate threshold and the change rate is less than a second rate threshold, and the second temperature difference is greater than the second temperature difference threshold, where the second rate threshold is greater than the first rate threshold.

Optionally, increasing the opening degree of the second electronic expansion valve in a second preset manner, when the second temperature difference is greater than the second temperature difference threshold and the change rate is greater than or equal to a second rate threshold.

Optionally, decreasing the opening degree of the second electronic expansion valve in a third preset manner, when the second temperature difference is greater than a preset temperature difference upper limit.

Optionally, determining a seventh closed-loop control instruction of the second electronic expansion valve according to the second temperature difference and a seventh closed-loop control model, when the second temperature difference is less than or equal to the second temperature difference threshold.

When the refrigeration requirement level is high, that is, it is an emergency state, in order to ensure the safety of the vehicle (i.e., the system), first entering a phase in which the battery is refrigerated separately. At this time, the compressor controls a cooling liquid temperature at an inlet of the battery in the cooling liquid circuit, and the electronic expansion valve in front of the refrigerant input end of the Chiller refrigerator controls the supercooling degree, and the electronic expansion valve in front of the evaporator is fixed at a small opening degree to take into account the refrigeration of the passenger compartment and allocate a small part of refrigeration performance to the passenger compartment. That is, on the premise of ensuring the safety of the battery, the comfort requirement of the user is still considered, so that a usage experience of the use can be improved. After entering a phase in which the passenger compartment and the battery are refrigerated simultaneously, when the compressor controls a cooling liquid temperature at the inlet of the battery in the cooling liquid circuit, and the electronic expansion valve in front of the refrigerant input end of the Chiller refrigerator controls the supercooling degree, and the electronic expansion valve in front of the evaporator controls the air outlet temperature of the evaporator, at the same time, a difference between a water temperature at a water inlet of the battery and a target water temperature at the water inlet and a change rate of the water temperature at the water inlet of the battery are monitored, and the opening degree of the electronic expansion valve in front of the evaporator, i.e., the opening degree of the second electronic expansion valve is finally determined, thus realizing the flexible allocation of the refrigeration capacity in real time, achieving a balance in the allocation of the refrigeration performance between the passenger compartment and the battery, thereby maintaining the safety of the system, and ensuring the ride comfort of the user.

In an implementation, the vehicle refrigeration control method further includes:

if it is detected that the temperature of the battery is greater than or equal to a first temperature threshold, closing the second electronic expansion valve until the temperature of the battery is less than or equal to the second temperature threshold, and re-entering monitoring of a temperature difference between the cooling liquid temperature and the second target temperature and the change rate of the cooling liquid temperature in real time to determine the opening degree adjustment instruction of the second electronic expansion valve.

Since the temperature of the battery is also related to the power output, when the electricity consumption increases, the temperature of the battery will also rise rapidly. At this time, in order to ensure the safety of the battery, when it is monitored that the temperature of the battery is too high, the refrigeration performance is concentrated on the refrigeration of the battery, so as to make the temperature of the battery quickly return to a normal range.

In a second aspect, the present application discloses a vehicle refrigeration control apparatus, including:

a monitoring module, configured to monitor a temperature and a change rate of the temperature of a battery in a target vehicle in real time;

a processing module, configured to determine a refrigeration requirement level of the battery according to the temperature and the change rate;

the monitoring module is further configured to monitor refrigeration requirements of a passenger compartment and the battery of the target vehicle;

the processing module is further configured to determine a refrigeration mode to be entered according to a current refrigeration requirement level of the battery, when it is detected that the passenger compartment and the battery of the target vehicle both have refrigeration requirements at the same time;

where the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase.

In a third aspect, the present application discloses an electronic device including: a processor, and a memory communicatively connected with the processor;

the memory stores computer-executable instructions;

the processor executes the computer-executable instructions stored in the memory to implement any one of the vehicle refrigeration control method in the first aspect.

In a fourth aspect, the present application discloses a computer readable storage medium, computer-executable instructions are stored in the computer-readable storage medium, and when the computer-executable instructions are executed by a processor, any one of possible method in the first aspect is implemented.

In a fifth aspect, the present application discloses a computer program product, including a computer program, when the computer program is executed by a processor, any one of possible method in the first aspect is implemented.

In a sixth aspect, the present application discloses a computer program including program codes, and when a computer runs the computer programs, the program codes execute any one of possible method in the first aspect.

In combination with the above technical solutions, the present application provides a vehicle refrigeration control method and apparatus, a device, a medium and a program product, a temperature and a change rate of the temperature of a battery in a target vehicle are monitored in real time; then a refrigeration requirement level of the battery is determined according to the temperature and the change rate; a refrigeration mode to be entered is determined according to a current refrigeration requirement level of the battery when it is detected that a passenger compartment and the battery of the target vehicle both have refrigeration requirements at the same time; then determining control instructions of respective target control objects according to the refrigeration mode, where the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase. In this way, the technical problem of how to allocate and control the refrigeration capacity of a new energy vehicle is solved, thus achieving the technical effect of flexibly allocating the total refrigeration performance of the vehicle under the premise of ensuring the comfort of the passenger compartment first, to guarantee the refrigeration of the battery effectively.

## BRIEF DESCRIPTION OF DRAWINGS

FIG. 1 is a structural schematic diagram of a vehicle-mounted heat pump system and cooling liquid circulation system provided by the present application.
FIG. 2 is a flowchart schematic diagram of a vehicle refrigeration control method provided by an embodiment of the present application.
FIG. 3 is a flowchart schematic diagram of another vehicle refrigeration control method provided by an embodiment of the present application.
FIG. 4 is a flowchart schematic diagram of yet another vehicle refrigeration control method provided by an embodiment of the present application.
FIG. 5 is a structural schematic diagram of a vehicle refrigeration control apparatus provided by an embodiment of the present application.
FIG. 6 is a structural schematic diagram of an electronic device provided by an embodiment of the present application.

## DESCRIPTION OF EMBODIMENTS

To make the purposes, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without paying creative effort shall fall within the protection scope of the present application.

The terms "first", "second", "third", "fourth", etc. (if any) in the description and claims of the present application and the above accompanying drawings are used to distinguish similar objects, and not necessarily used to describe a specific sequence or a precedence order. It shall be understood that the data so used is interchangeable under appropriate circumstances such that embodiments of the application described herein, for example, can be implemented in sequences other than those illustrated or described herein. Furthermore, the terms "including", "having", and any variations thereof, are intended to cover non-exclusive inclusion, for example, a process, a method, a system, a product or a device that includes a series of steps or units is not necessarily limited to those steps or units clearly listed, but may include other steps or units not expressly listed or inherent to the process, method, product, or device.

First, the nouns involved in the present application are explained.

A heat pump system refers to a heat exchange system installed on a vehicle, which is similar to an internal structure mechanism of a traditional air conditioner, including: a compressor, an internal heat exchanger, an external heat exchanger, a plurality of electronic expansion valves, a plurality of solenoid valves and refrigerants in the cooling line. Depending on a different process of refrigeration and heating, the internal heat exchanger and the external heat exchanger can be used as an evaporator or a condenser.

A cooling liquid circulation system refers to a system for cooling or heating a power equipment, such as a motor, a battery, an engine on the vehicle, the cooling liquid circulation system and the heat pump system are two parallel independent thermal management systems, and the cooling liquid circulation system includes a battery circuit, a water pump and cooling liquid circulating in pipelines. Different from the heat pump system, the cooling liquid circulation system cannot realize the evaporation and condensation of the cooling liquid, but transfers heat through heat radiation or air cooling effect with air or other gases (such as vaporized refrigerant).

The inventive concept of the present application is:

the inventors of the present application found that when the passenger compartment is refrigerated alone or the battery is refrigerated alone, since there is only one target temperature under control, there is no refrigeration capacity allocation problem, and the control strategy is relatively simple. However, when the passenger compartment and the battery both have refrigeration requirements at the same time, the ideal situation is to quickly meet the target refrigeration requirements of the passenger compartment and the battery at the same time. However, in practice, due to the limited refrigeration capacity of the system, the rapid refrigeration of the passenger compartment and the battery at the same time needs a high refrigeration power output. The existing practice is to increase the total refrigeration power of the vehicle configured, but this will lead to high system manufacturing costs, and for different vehicle models, it is impossible to achieve a universal design. When the dual refrigeration requirements cannot be met at the same time, how to reasonably allocate the refrigeration energy is an important issue. Moreover, even if the refrigeration capacity of the system is sufficient, how to control each actuator to ensure the safety of the system without affecting the comfort of the passenger compartment is also a difficult issue.

In order to solve the above problems, the present application proposes a vehicle refrigeration control method to both ensure the safety of the system and minimize the affection of the comfort of the passenger compartment, under the circumstance where the passenger compartment and the battery both have the refrigeration requirements at the same time, but the refrigeration power of the refrigeration system cannot meet the total refrigeration power requirement of the both at the same time.

(1) Determining the refrigeration level of the battery (such as low, medium, high, and emergency) according to the temperature of the battery body and the heating rate of the battery. The refrigeration levels of the battery are different, the target water temperatures of an inlet of the battery are also different, and the higher the refrigeration level, the lower the target water temperature. The purpose of the present application is to ensure safety, accurately judge the state of the battery, and then judge the priority of the refrigeration requirement of the battery and the ratio for allocating the refrigeration capacity.

(2) When the passenger compartment and the battery both have the refrigeration requirements at the same time, if the refrigeration level of the battery is non-emergency (low, medium, high), first entering the passenger compartment refrigeration mode, and when a temperature of an evaporator reaches around a target temperature of the evaporator or after the refrigeration for the passenger compartment has been running for a period of time, and then entering the dual-mode in which both of the passenger compartment and the battery are refrigerated; if the refrigeration level of the battery is emergency, entering the battery refrigeration mode first, and when the water temperature at the water inlet of the battery reaches around the target water temperature or after the battery refrigeration mode has been running for a period of time, and then entering the dual-mode in which both of the passenger compartment and the battery are refrigerated. The purpose of the present application is to try not to affect the comfort of the passenger compartment under the premise of ensuring safety.

(3) When the passenger compartment and the battery both have the refrigeration requirements at the same time and the refrigeration level of the battery is non-emergency, the control strategy is: first entering the passenger compartment refrigeration mode phase, the compressor controls the air outlet temperature of the evaporator, the electronic expansion valve in front of the evaporator controls the degree of supercoiling, the electronic expansion valve in front of Chiller refrigerator is closed. When entering the dual-mode phase in which the passenger compartment and the battery are refrigerated, the compressor controls the air outlet temperature of the evaporator, the electronic expansion valve in front of the evaporator controls the degree of supercoiling, and the electronic expansion valve in front of the Chiller refrigerator monitors a difference between the air outlet temperature of the evaporator and a target air outlet temperature of the evaporator, a valve is opened slowly/a valve is closed slowly/the opening degree is maintained. The purpose of the present application is to give priority to the refrigeration of the passenger compartment to ensure the comfort of the passenger compartment.

(4) When the passenger compartment and the battery both have the refrigeration requirements at the same time and the battery refrigeration level is emergency, the control strategy is: first entering the battery refrigeration mode phase, the compressor controls the water temperature at the water inlet of the battery, and the electronic expansion valve in front of the Chiller refrigerator controls the supercooling degree, the electronic expansion valve in front of the evaporator is fixed at a small opening degree. When entering the dual-mode phase in which the passenger compartment and the battery are refrigerated, the compressor controls the water temperature at the water inlet of the battery, the electronic expansion valve in front of the Chiller refrigerator controls the supercooling degree, and the electronic expansion valve in front of the evaporator controls the temperature of the evaporator, and at the same time, a difference between the water temperature at the water inlet of the battery and a target water temperature at the water inlet is monitored, the opening degree of the electronic expansion valve is finally determined. The purpose of the present application is to give priority to the refrigeration of the battery, and to satisfy the comfort of the passenger compartment as much as possible under the premise of ensuring safety.

Specific application scenario of the present application

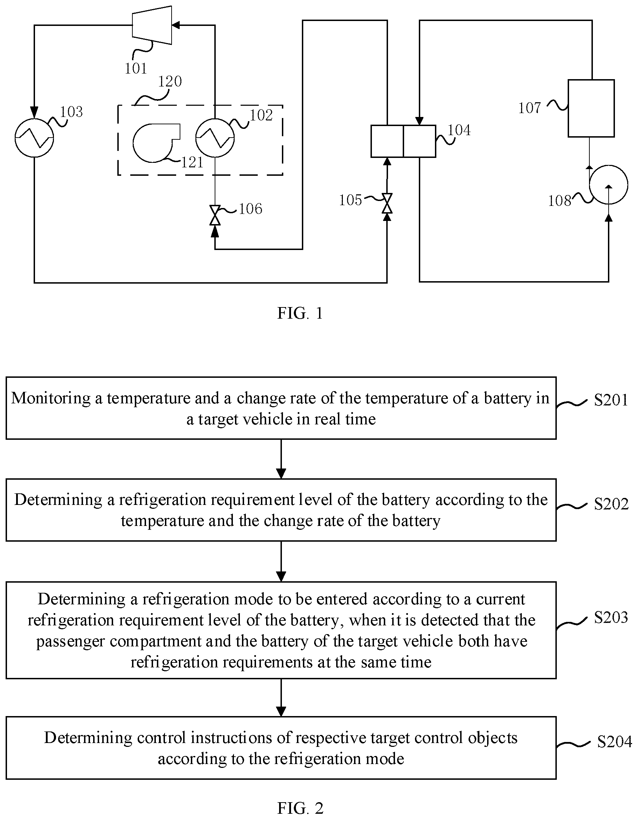

FIG. 1 is a structural schematic diagram of a vehicle-mounted heat pump system and cooling liquid circulation system provided by the present application. As shown in FIG. 1, the heat pump system includes: a compressor 101, an evaporator 102, a condenser 103, an air conditioner box 120, a blower 121 and so on. The cooling liquid circulation system includes: a battery 107 and a battery circuit pump 108 and so on. In addition, there is a Chiller refrigerator 104 between the heat pump system and the cooling liquid circulation system. Through the heat transfer between the refrigerant in the heat pump system and the cooling liquid in the cooling liquid circulation system, achieving heat exchange between the heat pump system and the cooling liquid circulation system.

In the following, the specific embodiments in the technical solution of the present application and how the technical solution of the present application solves the above technical problems will be illustrated in details. The following specific embodiments may be combined with each other, and the same or similar concepts or processes may not be repeated in some embodiments. In the following, embodiments of the present application will be described in conjunction with the accompanying drawings.

FIG. 2 is a flowchart schematic diagram of a vehicle refrigeration control method provided by an embodiment of the present application. As shown in FIG. 2, the specific steps of the vehicle refrigeration control method include the following.

S201. Monitoring a temperature and a change rate of the temperature of a battery in a target vehicle in real time.

In this step, the temperature of the battery can be directly read from the temperature value detected by the temperature sensor installed in the battery, or the central controller of the thermal management system sends a data request to the battery management system, and the battery management system responds to the data request and sends the temperature data of the battery to the central controller through the bus.

In a possible design, the carrier of the vehicle refrigeration control method is a cloud server, and the cloud server manages a large number of new energy vehicles, including passenger vehicles, refrigerated freight vehicles, reconnaissance vehicles, logistics cold chain vehicles and so on. The real-time temperature and the change rate of the temperature of the battery on each target vehicle are obtained through the Internet of Things.

S202. Determining a refrigeration requirement level of the battery according to the temperature and the change rate of the battery.

In this step, the refrigeration requirement level can be at least divided into: an emergency state and a non-emergency state. When the temperature of the battery is less than or equal to a preset state threshold, the refrigeration requirement level is a non-emergency state, otherwise it is an emergency state.

In a possible design, in order to further refine the allocation of the refrigeration performance, the non-emergency state is further refined and divided into at least three levels: a low level, a medium level and a high level.

Specifically, in this embodiment, the refrigeration requirement levels of the battery are divided into: a low level, a medium level, a high level and an emergency state:

if T1≤the temperature of the battery<T2, and the change rate≤V1, the refrigeration requirement level of the battery is low;
if T2≤the temperature of the battery<T3, and the change rate≤V1, the refrigeration requirement level of the battery is medium;
if T3≤the temperature of the battery<T4, and the change rate≤V1, the refrigeration requirement level of the battery is high, or if T1≤the temperature of the battery<T3, and the rise rate of the temperature of the battery>V1, then the refrigeration requirement level of the battery is high;
if the temperature of the battery≥T4, the refrigeration requirement level of the battery is an emergency state, or if T3≤the temperature of the battery body<T4, and the rise rate of the temperature of the battery>V1, the refrigeration requirement level of the battery is an emergency state.

Correspondingly, when the refrigeration level of the battery is low, the target cooling liquid temperature at the battery inlet of the battery cooling circuit is T5; when the refrigeration level of the battery is medium, the target cooling liquid temperature at the battery inlet of the cooling circuit is T6; when the refrigeration level of the battery is high, the target cooling liquid temperature at the battery inlet of the cooling circuit is T7; when the refrigeration level of the battery is emergency, the target cooling liquid temperature at the battery inlet of the cooling circuit is T8.

Where T1<T2<T3<T4; T5<T6<T7<T8.

S203. Determining a refrigeration mode to be entered according to a current refrigeration requirement level of the battery, when it is detected that a passenger compartment and the battery of the target vehicle both have refrigeration requirements at the same time.

In this step, the refrigeration mode includes: a single-mode phase and a dual-mode phase. The single-mode phase is used for refrigerating the passenger compartment or the battery alone, and the dual-mode phase is used for simultaneously refrigerating the passenger compartment and the battery, and the single-mode phase is set to be prior to the dual-mode phase.

Specifically, the single-mode phase includes: a passenger compartment refrigeration mode and a battery refrigeration mode.

When the refrigeration requirement level of the battery is non-emergency, entering the passenger compartment refrigeration mode, and monitoring a first air outlet temperature in real time, where the first air outlet temperature includes an air outlet temperature at a location where an internal heat exchanger is located; when a first temperature difference between the first air outlet temperature and a first target temperature is less than or equal to a first temperature difference threshold, or a first running time of the passenger compartment refrigeration mode is greater than or equal to a first preset time, entering the dual-mode phase.

When the refrigeration requirement level is emergency, entering the battery refrigeration mode, and monitoring a cooling liquid temperature at the first position in real time. The first position includes an entrance of a battery cooling pipeline in a battery cooling circuit, the battery cooling circuit is included in the cooling liquid circulation system; when a second temperature difference between a cooling liquid temperature and a second target temperature is less than or equal to a second temperature difference threshold, or a second running time of the battery refrigeration mode is greater than or equal to a second preset time, entering the dual-mode phase.

It should be noted that when the passenger compartment and the battery of the target vehicle both have the refrigeration requirements at the same time, in an ideal situation, if a rated power of a vehicle-mounted heat pump system and cooling liquid circulation system are large enough, then the vehicle-mounted heat pump system can perform refrigeration on the passenger compartment alone according to the traditional refrigeration method (that is, the refrigeration principle of the air conditioner), and the cooling liquid circulation system can perform refrigeration on the battery alone according to the traditional method (that is, the cooling liquid circulation of the battery takes away the heat of the battery in the form of heat transfer). The two refrigeration processes are two independent refrigeration processes without coupling.

However, the current situation is that due to the limited cost, rated powers of the vehicle-mounted heat pump system and the cooling liquid circulation system are limited, that is, the total refrigeration power of the target vehicle is limited, and it cannot meet the total refrigeration power requirement that the passenger compartment and battery both have the refrigeration requirements at the same time, in other words, at this time, the total refrigeration requirement power of the target vehicle is greater than the total refrigeration power. That is, the vehicle refrigeration control method provided by the embodiments of the present application is performed under the circumstance that the passenger compartment and the battery both have refrigeration requirements at the same time, and the total refrigeration requirement power of the target vehicle is greater than the total refrigeration power.

However, at this time, the total refrigeration power of the vehicle-mounted heat pump system and the cooling liquid circulation system is greater than or equal to a first refrigeration requirement power of the passenger compartment or a second refrigeration requirement power of the battery. Thus, the vehicle refrigeration control method provided by the embodiments of the present application is to combine the vehicle-mounted heat pump system and the cooling liquid circulation system, the total refrigeration power is allocated to the first refrigeration requirement power and the second refrigeration requirement power in sequence, and priority is given to the refrigeration requirement of the passenger compartment, so as to solve the contradiction between the refrigeration requirement and the total refrigeration supply through a solution with an optimized allocation manner.

S204. Determining control instructions of respective target control objects according to the refrigeration mode.

In this step, when the refrigeration level of the battery is low, that is, it is a non-emergency state, a control method following the principle of ensuring the comfort of the passenger compartment is given priority. In an individual refrigeration phase of the passenger compartment, the compressor is configured to control an air outlet temperature of an evaporator; and an electronic expansion valve (i.e., the first electronic expansion valve) in front of the evaporator (i.e., the internal heat exchanger) controls a supercooling degree of an external condenser (i.e., the external heat exchanger), thus improving the stability and safety of the entire system. At the same time, in order to concentrate the refrigeration performance on the heat pump system, the electronic expansion valve (i.e., the second electronic expansion valve) at the refrigerant input end of the multi-system heat exchanger (i.e., the Chiller refrigerator) is closed. After entering the phase in which the passenger compartment and the battery are refrigerated at the same time, the compressor controls an air outlet temperature of the evaporator, the electronic expansion valve in front of the evaporator controls the supercooling degree of the external condenser, and the electronic expansion valve at the refrigerant input end of the Chiller refrigerator monitors a difference between the air outlet temperature of the evaporator and a target air outlet temperature of the evaporator; a valve is opened slowly, or a valve is closed slowly, or the opening degree is maintained. In this way, through the cooperation of the compressor and the second electronic expansion valve, the priority allocation for refrigeration of the passenger compartment is completed, thereby ensuring the comfort experience of the user.

Specifically, when the passenger compartment and the battery both have the refrigeration requirements at the same time, and the refrigeration requirement level of the battery is non-emergency, in the passenger compartment refrigeration mode, as shown in FIG. 1, the compressor 101 controls the air outlet temperature of the evaporator 102, i.e., the air temperature of the air outlet side at the installation position of the evaporator 102 on the air conditioner box 120; the electronic expansion valve 106 in front of the evaporator 102 controls the supercooling degree of the external condenser 103; the electronic expansion valve 105 in front of the Chiller refrigerator 104 is closed.

When entering the dual-mode in which the passenger compartment and battery are refrigerated, the compressor 101 controls the air outlet temperature of the evaporator 102, the electronic expansion valve 106 in front of the evaporator 102 controls the supercooling degree of the external condenser 103, and the electronic expansion valve 105 in front of the Chiller refrigerator 104 monitors the difference between the air outlet temperature of the evaporator 102 and the target air outlet temperature, so as to slowly open the valve, or slowly close the valve, or maintain the opening degree.

In this step, the refrigeration requirement level is high, that is, it is in an emergency state, in order to ensure the safety of the vehicle (i.e., the system), first entering a phase in which the battery is refrigerated separately. At this time, the compressor controls a cooling liquid temperature at an inlet of the battery in the cooling liquid circuit, and the electronic expansion valve in front of the refrigerant input end of the Chiller refrigerator controls the supercooling degree, and the electronic expansion valve in front of the evaporator is fixed at a small opening degree to take into account the refrigeration of the passenger compartment and allocate a small part of refrigeration performance to the passenger compartment. That is, on the premise of ensuring the safety of the battery, the comfort requirement of the user is still considered, so that a usage experience of the use can be improved. After entering a phase in which the passenger compartment and the battery are refrigerated simultaneously, when the compressor controls a cooling liquid temperature at the inlet of the battery in the cooling liquid circuit, and the electronic expansion valve in front of the refrigerant input end of the Chiller refrigerator controls the supercooling degree, and the electronic expansion valve in front of the evaporator controls the air outlet temperature of the evaporator, at the same time, a difference between a water temperature at a water inlet of the battery and a target water temperature at the water inlet and a change rate of the water temperature at the water inlet of the battery are monitored, and the opening degree of the electronic expansion valve in front of the evaporator, i.e., the opening degree of the second electronic expansion valve is finally determined, thus realizing the flexible allocation of the refrigeration capacity in real time, achieving a balance in the allocation of the refrigeration performance between the passenger compartment and the battery, thereby maintaining the safety of the system, and ensuring the ride comfort of the user.

Specifically, as shown in FIG. 1, when the passenger compartment and the battery both have the refrigeration requirements at the same time, and the refrigeration level of the battery is an emergency state, first entering the battery refrigeration mode, and the compressor 101 controls the water temperature at the water inlet of the battery, the electronic expansion valve 105 in front of the Chiller refrigerator 104 controls the supercooling degree, and the electronic expansion valve 106 in front of the evaporator 102 is fixed at a small opening degree. When entering the dual-mode in which the passenger compartment and the battery are refrigerated, the compressor 101 controls the water temperature at the water inlet of the battery, the electronic expansion valve 105 in front of the Chiller refrigerator 104 controls the supercooling degree, and the electronic expansion valve 106 in front of the evaporator 102 controls the air outlet temperature of the evaporator, at the same time, a difference between the water temperature at the water inlet of the battery and a target water temperature at the water inlet, and the change rate of the water temperature at the water inlet of the battery are monitored, the opening degree of the electronic expansion valve 106 is finally determined.

It should be noted that the above-mentioned controls all adopt closed-loop controls, and those skilled in the art can select the required closed-loop control model according to the actual situation, such as PID (Proportion Integral Differential) proportional integral-differential control, a neural network control model, etc., which is not limited in the present application.

Embodiments of the present application provide a vehicle refrigeration control method, an apparatus, a device, a medium and a program product, a temperature and a change rate of the temperature of a battery in a target vehicle are monitored in real time; then a refrigeration requirement level of the battery is determined according to the temperature and the change rate; a refrigeration mode to be entered is determined according to a current refrigeration requirement level of the battery when it is detected that a passenger compartment and the battery of the target vehicle both have refrigeration requirements at the same time; then determining control instructions of respective target control objects according to the refrigeration mode, where the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase. In this way, the technical problem of how to allocate and control the refrigeration capacity of a new energy vehicle is solved, thus achieving the technical effect of flexibly allocating the total refrigeration performance of the vehicle under the premise of ensuring the comfort of the passenger compartment first, to guarantee the refrigeration of the battery effectively.

In order to introduce in more detail the different control modes in S203 and S204 under the two scenarios where the refrigeration requirements of the battery are the non-emergency state and the emergency state, the following shows a specific embodiment for illustration.

First, the control method for the case where the refrigeration requirement of the battery is non-emergency is introduced.

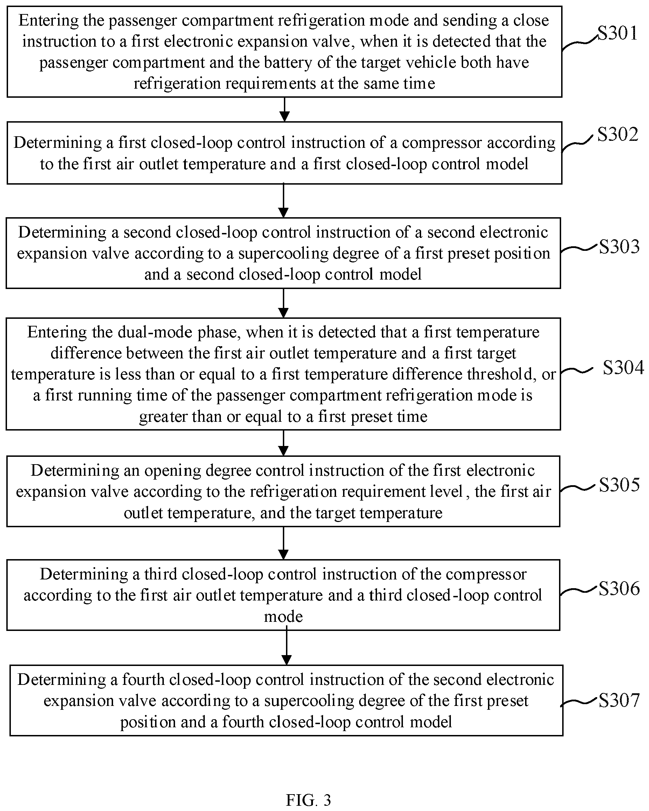

FIG. 3 is a flowchart schematic diagram of another vehicle refrigeration control method provided by the embodiment of the present application. As shown in FIG. 3, the specific steps of the vehicle refrigeration control method include the following.

S301. Entering the passenger compartment refrigeration mode and sending a close instruction to a first electronic expansion valve, when it is detected that the passenger compartment and the battery of the target vehicle both have refrigeration requirements at the same time.

In this step, the first electronic expansion valve is installed at a refrigerant input end of a multi-system heat exchanger, and the multi-system heat exchanger is configured for heat exchange between a heat pump system and a cooling liquid circulation system.

Specifically, as shown in FIG. 1, the first electronic expansion valve is an electronic expansion valve 105, and the multi-system heat exchanger is a Chiller refrigerator 104. A close instruction is sent to the electronic expansion valve 105, this enables the refrigeration performance of the heat pump system to be fully used for the refrigeration of the passenger compartment, so that the air temperature of the passenger compartment quickly reaches a preset temperature.

S302. Determining a first closed-loop control instruction of a compressor according to the first air outlet temperature and a first closed-loop control model.

In this step, the first air outlet temperature includes an air outlet temperature at a location where an internal heat exchanger is located.

In this embodiment, as shown in FIG. 1, the first air outlet temperature is an air temperature of an air outlet side of the evaporator 102 on the air conditioner box 120, and the blower 121 blows air in the passenger compartment to the evaporator 102 for cooling, the working state of the compressor is controlled through the first closed-loop control model, so that the air temperature in the passenger compartment declined rapidly to the target temperature.

S303. Determining a second closed-loop control instruction of a second electronic expansion valve according to a supercooling degree of a first preset position and a second closed-loop control model.

In this step, the first preset position includes an input end of an external heat exchanger, and the second electronic expansion valve is installed at an input end of the internal heat exchanger.

In this embodiment, as shown in FIG. 1, the external heat exchanger is the condenser 103, and the first preset position is the input end of the condenser 103, instead of directly controlling the electronic expansion valve at the input end of the condenser 103 as the prior art, in the present application, the supercooling degree at the input end of the condenser 103 is indirectly controlled by controlling the electronic expansion valve 106 at the input end of the internal heat exchanger (i.e., the evaporator 102), so that the cooperation between the evaporator 102 and the condenser 103 is more stable and safe.

S304. Entering the dual-mode phase, when it is detected that a first temperature difference between the first air outlet temperature and a first target temperature is less than or equal to a first temperature difference threshold, or a first running time of the passenger compartment refrigeration mode is greater than or equal to a first preset time.

In this step, the dual-mode phase is used for refrigeration of the passenger compartment and the battery at the same time. Simultaneous refrigeration of the passenger compartment and the battery requires a multi-system heat exchanger, and the cooling liquid in the cooling liquid circulation system is cooled in an air-cooled manner by the gaseous refrigerant in the heat pump system. That is to say, the multi-system heat exchanger allocates the refrigeration performance of the heat pump system to the cooling liquid circulation system, thus achieving allocation of the overall refrigeration performance of the target vehicle.

Specifically, as shown in FIG. 1, the multi-system heat exchanger is a Chiller refrigerator 104, and as long as the first electronic expansion valve opens the electronic expansion valve 105, it is possible to enter the dual-mode phase.

S305. Determining an opening degree control instruction of the first electronic expansion valve according to the refrigeration requirement level, the first air outlet temperature, and the target temperature.

In this step, the opening degree control instruction includes a valve opening rate and a valve closing rate, the refrigeration requirement level is positively correlated with the valve opening rate, and the refrigeration requirement level is inversely correlated with the valve closing rate.

Optionally, the opening degree control instruction includes an upper limit value of an opening degree, and the refrigeration requirement level is positively correlated with the upper limit value of the opening degree.

Specifically, the valve opening and closing rates of the electronic expansion valve 105 in front of the Chiller refrigerator 104 will be adjusted according to different refrigeration requirement levels of the battery. The higher the refrigeration level, the faster the electronic expansion valve 105 opens and the slower it closes; the lower the refrigeration level, the slower the electronic expansion valve 105 opens and the faster it closes.

An upper limit value is set for the opening degree of the electronic expansion valve 105 in front of the Chiller refrigerator 104, the higher the refrigeration level, the larger the upper limit value; the lower the refrigeration level, the smaller the upper limit value.

In this way, the total refrigeration performance of the target vehicle can be flexibly allocated according to different refrigeration requirement levels.

S306. Determining a third closed-loop control instruction of the compressor according to the first air outlet temperature and a third closed-loop control mode.

In this step, the compressor is configured to control the air outlet temperature of the air outlet side of the evaporator in a closed-loop manner.

S307. Determining a fourth closed-loop control instruction of the second electronic expansion valve according to a supercooling degree of the first preset position and a fourth closed-loop control model.

For steps S306 and S307, the closed-loop control model of steps S302 and S303 may be the same. This can reduce the computation load of the controller or processing module or cloud server.

In one possible design, the closed-loop control models are all different, because in the single-mode phase, the stability requirement thereof is lower than that in the dual-mode phase, so the closed-loop control model is more likely to ensure rapidity of regulation in the single-mode phase, and is more likely to ensure control overshoot and stability in the dual-mode phase.

The embodiment of the present application provides a vehicle refrigeration control method. When the refrigeration level of the battery is low, that is, it is a non-emergency state, a control method following the principle of ensuring the comfort of the passenger compartment is given priority. In an individual refrigeration phase of the passenger compartment, the compressor is configured to control an air outlet temperature of an evaporator; and an electronic expansion valve (i.e., the first electronic expansion valve) in front of the evaporator (i.e., the internal heat exchanger) controls a supercooling degree of an external condenser (i.e., the external heat exchanger), thus improving the stability and safety of the entire system. At the same time, in order to concentrate the refrigeration performance on the heat pump system, the electronic expansion valve (i.e., the second electronic expansion valve) at the refrigerant input end of the multi-system heat exchanger (i.e., the Chiller refrigerator) is closed. After entering the phase in which the passenger compartment and the battery are refrigerated at the same time, the compressor controls an air outlet temperature of the evaporator, the electronic expansion valve in front of the evaporator controls the supercooling degree of the external condenser, and the electronic expansion valve at the refrigerant input end of the Chiller refrigerator monitors a difference between the air outlet temperature of the evaporator and a target air outlet temperature of the evaporator; a valve is opened slowly, or a valve is closed slowly, or the opening degree is maintained. In this way, through the cooperation of the compressor and the second electronic expansion valve, the priority allocation for refrigeration of the passenger compartment is completed, thereby ensuring the comfort experience of the user.

In the following, the control method when the refrigeration requirement of the battery is an emergency state will be introduced.

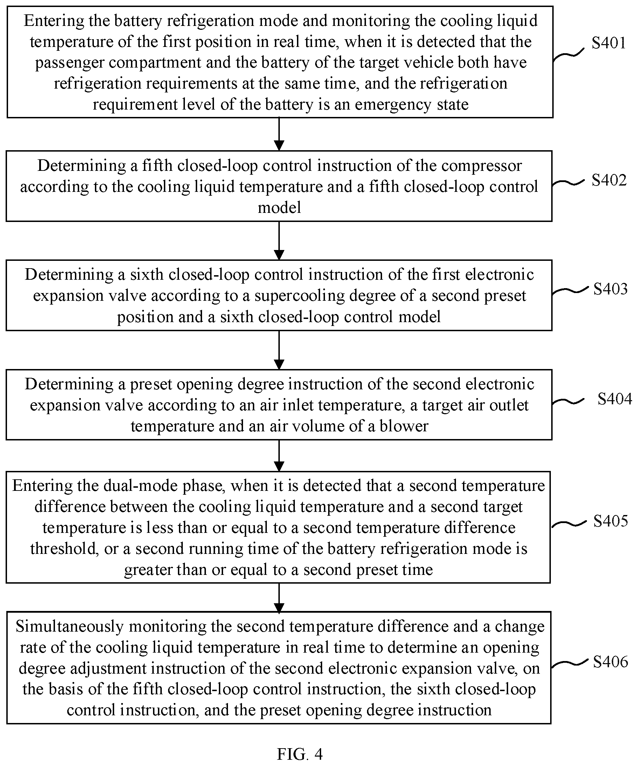

FIG. 4 is a flowchart schematic diagram of another vehicle refrigeration control method provided by an embodiment of the present application. As shown in FIG. 4, the specific steps of the vehicle refrigeration control method include the following.

S401. Entering the battery refrigeration mode and monitoring the cooling liquid temperature of the first position in real time, when it is detected that the passenger compartment and the battery of the target vehicle both have refrigeration requirements at the same time, and the refrigeration requirement level of the battery is an emergency state.

In this step, the first position includes an entrance of a battery cooling pipeline in a battery cooling circuit, and the battery cooling circuit is included in the cooling liquid circulation system.

S402. Determining a fifth closed-loop control instruction of the compressor according to the cooling liquid temperature and a fifth closed-loop control model.

In this step, the main control temperature of the compressor is the temperature of the battery cooling liquid, so the refrigeration performance of the heat pump system can be concentrated on cooling the battery, in this way, the temperature of the battery can be declined rapidly.

S403. Determining a sixth closed-loop control instruction of the first electronic expansion valve according to a supercooling degree of a second preset position and a sixth closed-loop control model.

In this step, the second preset position includes the refrigerant input end of the multi-system heat exchanger. In order to make the refrigerant work efficiently in the multi-system heat exchanger, it is necessary to control the first electronic expansion valve to adjust the supercooling degree.

Specifically, as shown in FIG. 1, the multi-system heat exchanger is the Chiller refrigerator 104, and the first electronic expansion valve is the electronic expansion valve 105. The supercooling degree of the refrigerant input end of the Chiller refrigerator 104 is controlled correspondingly through different opening degrees of the electronic expansion valve 105.

S404. Determining a preset opening degree instruction of the second electronic expansion valve according to an air inlet temperature, a target air outlet temperature and an air volume of a blower.

In this step, the preset opening degree instruction is used for fixedly setting an opening degree of the second electronic expansion valve to be a preset opening degree, the air inlet temperature includes a temperature of an air inlet side at a location where an internal heat exchanger is located, the target air outlet temperature is a preset temperature of an air outlet side at a location where the internal heat exchanger is located.

Specifically, the refrigeration load is first calculated, and a possible implementation is as follows:

$$\text{Refrigeration load} = (\text{Air inlet temperature} - \text{Target air outlet temperature}) *$$

$$\text{Air volume of blower} * \text{Air specific heat value}$$

Then, determining the preset opening degree instruction according to the corresponding relationship between the refrigeration load and the opening degree of the second electronic expansion valve.

In this embodiment, the preset opening degree corresponding to the preset opening degree instruction is less than or equal to an opening degree threshold, for example, less than or equal to 5%-10%. That is, maintaining a small opening degree can avoid a big impact on the refrigeration of the battery, and can also make the user feel that refrigeration is still effective at the air outlet, so that the user will not misunderstand that the heat pump system is not working, and a usage experience of the user is improved.

S405. Entering the dual-mode phase, when it is detected that a second temperature difference between the cooling liquid temperature and a second target temperature is less than or equal to a second temperature difference threshold, or a second running time of the battery refrigeration mode is greater than or equal to a second preset time.

S406. Simultaneously monitoring the second temperature difference and a change rate of the cooling liquid temperature in real time to determine an opening degree adjustment instruction of the second electronic expansion valve, on the basis of the fifth closed-loop control instruction, the sixth closed-loop control instruction, and the preset opening degree instruction.

In this step, maintaining the closed-loop control of the compressor and the first electronic expansion valve, and at the same time, monitoring the second temperature difference between the cooling liquid temperature and the second target temperature, and the change rate of the cooling liquid temperature in real time, so as to facilitate subsequent proper adjustment of the opening degree of the electronic expansion valve.

Specifically, (1) decreasing the opening degree of the second electronic expansion valve in a first preset manner, when the second temperature difference is greater than the second temperature difference threshold and the second temperature difference is less than or equal to the preset temperature difference upper limit.

In this step, the first preset manner may be to linearly decrease the opening degree of the second electronic expansion valve, and the linear slope of the decrease corresponds to the refrigeration requirement level of the battery. The higher the refrigeration requirement level, the larger the absolute value of the slope.

Optionally, the first preset manner may also be a non-linear manner, such as a hyperbolic or inverse proportional function manner. What remains unchanged is that the higher the refrigeration requirement level, the faster the decrease rate of the opening degree.

For example, if TDwater<Water temperature at the water inlet of the battery - Target water temperature at the water inlets TDwaterUp, and the change rate of the water temperature at the water inlet of the battery<VTwater1, then decreasing the opening degree of the electronic expansion valve in front of the evaporator. At this time, the refrigeration requirement of the battery is low.

(2) Keeping the opening degree of the second electronic expansion valve degree unchanged, when the change rate is greater than or equal to the first rate threshold and the change rate is less than a second rate threshold, and the second temperature difference is greater than the second temperature difference threshold, where the second rate threshold is greater than the first rate threshold.

For example, if the water temperature at the water inlet of the battery - the target water temperature at the water inlet >TDwater, and VTwater1 <, the change rate of the water temperature at the water inlet of the battery<VTwater2, then the opening degree of the electronic expansion valve in front of the evaporator is maintained. At this time, the refrigeration requirement of the battery can be regarded as unchanged.

(3) Increasing the opening degree of the second electronic expansion valve in a second preset manner, when the second temperature difference is greater than the second temperature difference threshold and the change rate is greater than or equal to a second rate threshold.

In this step, the second preset manner may also be to linearly increase the opening degree of the second electronic expansion valve, and the linear slope of the increase corresponds to the refrigeration requirement level of the battery. The higher the refrigeration requirement level, the smaller the absolute value of the slope.

Optionally, the second preset manner may also be a non-linear manner, such as a hyperbolic or inverse proportional function manner. What remains unchanged is that the higher the refrigeration requirement level, the slower the increase rate of the opening degree.

For example, if the water temperature at the water inlet of the battery - the target water temperature at the water inlet>TDwater, and the change rate of the water temperature at the water inlet of the battery≥VTwater2, then increasing the opening degree of the electronic expansion valve in front of the evaporator to allocate the refrigeration performance of the heat pump system to the Chiller refrigeration 104 for cooling the battery cooling liquid. At this time, the refrigeration requirement of the battery is high.

(4) Decreasing the opening degree of the second electronic expansion valve in a third preset manner, when the second temperature difference is greater than a preset temperature difference upper limit.

In this step, the third preset manner may be to linearly decrease the opening degree of the second electronic expansion valve, and the linear slope of the decrease corresponds to the refrigeration requirement level of the battery. The higher the refrigeration requirement level, the larger the absolute value of the slope.

Optionally, the third preset manner may also be a non-linear manner, such as a hyperbolic or inverse proportional function manner. What remains unchanged is that the higher the refrigeration requirement level, the faster the decrease rate of the opening degree.

For example, if the water temperature at the water inlet of the battery - the target water temperature at the water inlet>TDwaterUp, then decreasing the opening degree of the electronic expansion valve in front of the evaporator. At this time, the refrigeration requirement of the battery is high.

(5) Determining a seventh closed-loop control instruction of the second electronic expansion valve according to the second temperature difference and a seventh closed-loop control model, when the second temperature difference is less than or equal to the second temperature difference threshold.

For example, if the water temperature at the water inlet of the battery - the target water temperature at the water inlet≤TDwater, the electronic expansion valve in front of the evaporator controls the temperature of the evaporator in a closed-loop manner.

Furthermore, since the temperature of the battery is also related to the power output, when the electricity consumption increases, the temperature of the battery will also rises rapidly. At this time, in order to ensure the safety of the battery, when it is monitored that the temperature of the battery is too high, the refrigeration performance is concentrated on the refrigeration of the battery, so as to make the temperature of the battery quickly return to a normal range.

That is, when entering the dual-mode phase in which the passenger compartment and the battery are refrigerated, the vehicle refrigeration control method provided by the present application further includes:
if it is detected that the temperature of the battery is greater than or equal to a first temperature threshold, closing the second electronic expansion valve until the temperature of the battery is less than or equal to the second temperature threshold, and re-entering monitoring of a temperature difference between the cooling liquid temperature and the second target temperature and the change rate of the cooling liquid temperature in real time to determine the opening degree adjustment instruction of the second electronic expansion valve.

Specifically, if the temperature of the battery body≥TBettry1, then closing the electronic expansion valve in front of the evaporator until the temperature of the battery body≤TBettry2, and re-entering the above-mentioned control.

The embodiment of the present application provides a vehicle refrigeration control method. When the refrigeration requirement level is high, that is, it is in an emergency state, in order to ensure the safety of the vehicle (i.e., the system), first entering a phase in which the battery is refrigerated separately. At this time, the compressor controls a cooling liquid temperature at an inlet of the battery in the cooling liquid circuit, and the electronic expansion valve in front of the refrigerant input end of the Chiller refrigerator controls the supercooling degree, and the electronic expansion valve in front of the evaporator is fixed at a small opening degree to take into account the refrigeration of the passenger compartment and allocate a small part of refrigeration performance to the passenger compartment. That is, on the premise of ensuring the safety of the battery, the comfort requirement of the user is still considered, so that a usage experience of the use can be improved. After entering a phase in which the passenger compartment and the battery are refrigerated simultaneously, when the compressor controls a cooling liquid temperature at the inlet of the battery in the cooling liquid circuit, and the electronic expansion valve in front of the refrigerant input end of the Chiller refrigerator controls the supercooling degree, and the electronic expansion valve in front of the evaporator controls the air outlet temperature of the evaporator, at the same time, a difference between a water temperature at a water inlet of the battery and a target water temperature at the water inlet and a change rate of the water temperature at the water inlet of the battery are monitored, and the opening degree of the electronic expansion valve in front of the evaporator, i.e., the opening degree of the second electronic expansion valve is finally determined, thus realizing the flexible allocation of the refrigeration capacity in real time, achieving a balance in the allocation of the refrigeration performance between the passenger compartment and the battery, thereby maintaining the safety of the system, and ensuring the ride comfort of the user.

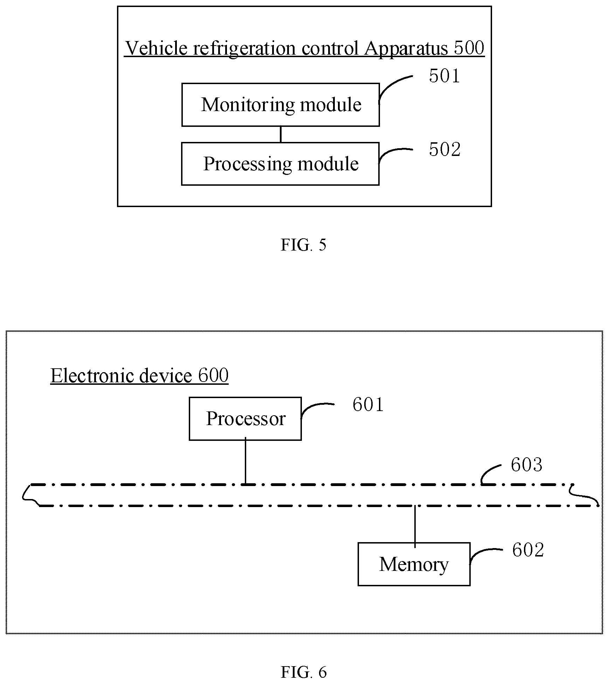

FIG. 5 is a structural schematic diagram of a vehicle refrigeration control apparatus provided by an embodiment of the present application. The image processing device 500 can be implemented by a software, a hardware or a combination of both.

As shown in FIG. 5, the image processing device 500 includes:

a monitoring module 501, configured to monitor a temperature and a change rate of the temperature of a battery in a target vehicle in real time;
a processing module 502, configured to determine a refrigeration requirement level of the battery according to the temperature and the change rate;
the monitoring module 501 is further configured to monitor refrigeration requirements for a passenger compartment and the battery of the target vehicle;
the processing module 502 is further configured to determine a refrigeration mode to be entered according to a current refrigeration requirement level of the battery, when it is detected that there are the refrigeration requirements for the passenger compartment and the battery of the target vehicle at the same time; and determine control instructions of respective target control objects according to the refrigeration mode;
where the refrigeration mode includes: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase.

In a possible design, the processing module 502 is configured to:

enter the passenger compartment refrigeration mode, and monitor a first air outlet temperature in real time, when the refrigeration requirement level is a non-emergency state, where the first air outlet temperature includes an air outlet temperature at a location where an internal heat exchanger is located;

enter the dual-mode phase, when a first temperature difference between the first air outlet temperature and a first target temperature is less than or equal to a first temperature difference threshold, or a first running time of the passenger compartment refrigeration mode is greater than or equal to a first preset time.

In a possible design, the processing module 502 is configured to:

when the refrigeration requirement level of the battery is a non-emergency state, send a close instruction to a first electronic expansion valve after entering the passenger compartment refrigeration mode, where the first electronic expansion valve is installed at a refrigerant input end of a multi-system heat exchanger, and the multi-system heat exchanger is configured for heat exchange between a heat pump system and a cooling liquid circulation system;

determine a first closed-loop control instruction of a compressor according to the first air outlet temperature and a first closed-loop control model;

determine a second closed-loop control instruction of a second electronic expansion valve according to a supercooling degree of a first preset position and a second closed-loop control model, where the first preset position includes an input end of an external heat exchanger, and the second electronic expansion valve is installed at an input end of the internal heat exchanger.

In a possible design, the processing module 502 is configured to:

after entering the battery refrigeration mode, determine a fifth closed-loop control instruction of the compressor according to the cooling liquid temperature and a fifth closed-loop control model;

determine a sixth closed-loop control instruction of the first electronic expansion valve according to a supercooling degree of a second preset position and a sixth closed-loop control model, where the second preset position includes the refrigerant input end of the multi-system heat exchanger;

determine a preset opening degree instruction of the second electronic expansion valve according to an air inlet temperature, a target air outlet temperature and an air volume of a blower, where the preset opening degree instruction is used for fixedly setting an opening degree of the second electronic expansion valve to be a preset opening degree, the air inlet temperature includes a temperature of an air inlet side at a location where an internal heat exchanger is located, the target air outlet temperature is a preset temperature of an air outlet side at a location where the internal heat exchanger is located.

In a possible design, the processing module 502 is configured to:
simultaneously monitor the second temperature difference and a change rate of the cooling liquid temperature in real time to determine an opening degree adjustment instruction of the second electronic expansion valve, on the basis of the fifth closed-loop control instruction, the sixth closed-loop control instruction, and the preset opening degree instruction.
In a possible design, the processing module 502 is configured to:
decrease the opening degree of the second electronic expansion valve in a first preset manner, when the second temperature difference is greater than the second temperature difference threshold and the second temperature difference is less than or equal to a preset temperature difference upper limit, and the change rate is less than a first rate threshold.
In a possible design, the processing module 502 is configured to:
keep the opening degree of the second electronic expansion valve degree unchanged, when the change rate is greater than or equal to the first rate threshold and the change rate is less than a second rate threshold, and the second temperature difference is greater than the second temperature difference threshold, where the second rate threshold is greater than the first rate threshold.
In a possible design, the processing module 502 is configured to:
increase the opening degree of the second electronic expansion valve in a second preset manner, when the second temperature difference is greater than the second temperature difference threshold and the change rate is greater than or equal to a second rate threshold.
In a possible design, the processing module 502 is configured to:

decrease the opening degree of the second electronic expansion valve in a third preset manner, when the second temperature difference is greater than a preset temperature difference upper limit.

In a possible design, the processing module 502 is configured to:
determine a seventh closed-loop control instruction of the second electronic expansion valve according to the second temperature difference and a seventh closed-loop control model, when the second temperature difference is less than or equal to the second temperature difference threshold.

In a possible design, the monitoring module 501 is further configured to detect the temperature of the battery;

the processing module 502 is further configured to:
if it is detected that the temperature of the battery is greater than or equal to a first temperature threshold, close the second electronic expansion valve until the temperature of the battery is less than or equal to the second temperature threshold, and then re-enter monitoring of a temperature difference between the cooling liquid temperature and the second target temperature and the change rate of the cooling liquid temperature in real time to determine the opening degree adjustment instruction of the second electronic expansion valve.

It is worth noting that the apparatus provided in the embodiment shown in FIG. 5 can execute the method provided in any one of the above-mentioned method embodiments, and its specific implementation principles, technical features, explanations of technical terms, and technical effects are similar, and will not be repeated here.

FIG. 6 is a structural schematic diagram of an electronic device provided by an embodiment of the present application. As shown in FIG. 6, the electronic device 600 may include: at least one processor 601 and a memory 602. FIG. 6 shows an electronic device with one processor as an example.

The memory 602 is configured to store programs. Specifically, the programs may include program codes, and the program codes include computer operation instructions.

The memory 602 may include a high-speed RAM memory, and may also include a non-volatile memory (non-volatile memory), such as at least one disk memory.

The processor 601 is configured to execute the computer-executable instructions stored in the memory 602 to implement the methods described in the above-mentioned method embodiments.

Where the processor 601 may be a central processing unit (central processing unit, referred to as CPU), or an application specific integrated circuit (application specific integrated circuit, referred to as ASIC), or is configured to implement one or more integrated circuits in embodiments of the present application.

Optionally, the memory 602 may be independent or integrated with the processor 601. When the memory 602 is a device independent of the processor 601, the electronic device 600 may further include:
a bus 603, configured to connect the processor 601 and the memory 602. The bus may be an industry standard architecture (industry standard architecture, ISA) bus, a peripheral component interconnect (peripheral component interconnect, PCI) bus, an extended industry standard architecture (extended industry standard architecture, EISA) bus, or the like. The bus can be divided into an address bus, a data bus, a control bus, etc., but it does not express that there is only one bus or one type of bus.

Optionally, in specific implementation, if the memory 602 and the processor 601 are integrated on one chip, the memory 602 and the processor 601 may communicate through an internal interface.

An embodiment of the present application further provides a computer readable storage medium, the computer readable storage medium may include: a medium that can store program codes, such as a U disk, a removable hard disk, a read-only memory (read-only memory, ROM), a random access memory (random access memory, RAM), a magnetic disk or an optical disk, and so on. Specifically, the computer readable storage medium stores program instructions, and the program instructions are used for implementing the methods in the above-mentioned method embodiments.

An embodiment of the present application further provides a computer program product, including computer programs, and when the computer programs are executed by a processor, the methods in the above-mentioned method embodiments are implemented.

An embodiment of the present application further provides a computer program, when the computer program is executed by a processor, the methods in the above-mentioned method embodiments are implemented.

The above description is only a specific implementation of the present application, but the protection scope of the present application is not limited thereto. Any persons of ordinary skill in the art can easily think of changes or substitutions within the technical scope disclosed in the present application, which should be covered within the protection scope of the present application. Therefore, the protection scope of the present application should be determined by the protection scope of the claims.

**Claims**

1. A vehicle refrigeration control method, comprising:

   monitoring a temperature and a change rate of the temperature of a battery in a target vehicle in real time;
   determining a refrigeration requirement level of the battery according to the temperature and the change rate;
   determining a refrigeration mode to be entered according to a current refrigeration requirement level of the battery, when it is detected that a passenger compartment and the battery of the target vehicle both have refrigeration requirements at the same time;
   wherein the refrigeration mode comprises: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase.

2. The vehicle refrigeration control method according to claim 1, wherein the single-mode phase comprises a passenger compartment refrigeration mode, wherein determining the refrigeration mode to be entered according to the current refrigeration requirement level of the battery comprises:

   entering the passenger compartment refrigeration mode and monitoring a first air outlet temperature in real time, when the refrigeration requirement level is a non-emergency state, wherein the first air outlet temperature comprises an air outlet temperature at a location where an internal heat exchanger is located;
   entering the dual-mode phase, when a first temperature difference between the first air outlet temperature and a first target temperature is less than or equal to a first temperature difference threshold, or a first running time of the passenger compartment refrigeration mode is greater than or equal to a first preset time.

3. The vehicle refrigeration control method according to claim 2, wherein after entering the passenger compartment refrigeration mode, sending a close instruction to a first electronic expansion valve, wherein the first electronic expansion valve is installed at a refrigerant input end of a multi-system heat exchanger, and the multi-system heat exchanger is configured for heat exchange between a heat pump system and a cooling liquid circulation system;
   correspondingly, after determining the refrigeration mode to be entered, determining control instructions of respective target control objects according to the refrigeration mode, comprises:

   determining a first closed-loop control instruction of a compressor according to the first air outlet temperature and a first closed-loop control model;
   determining a second closed-loop control instruction of a second electronic expansion valve according to a supercooling degree of a first preset position and a second closed-loop control model, wherein the first preset position comprises an input end of an external heat exchanger, and the second electronic expansion valve is installed at an input end of the internal heat exchanger.

4. The vehicle refrigeration control method according to claim 3, after entering the dual-mode phase, further comprising:

   determining an opening degree control instruction of the first electronic expansion valve according to the refrigeration requirement level, the first air outlet temperature, and the target temperature;
   determining a third closed-loop control instruction of the compressor according to the first air outlet temperature and a third closed-loop control model;
   determining a fourth closed-loop control instruction of the second electronic expansion valve according to a supercooling degree of the first preset position and a fourth closed-loop control model.

5. The vehicle refrigeration control method according to claim 4, wherein the opening degree control instruction comprises a valve opening rate and a valve closing rate, the refrigeration requirement level is positively correlated with the valve opening rate, and the refrigeration requirement level is inversely correlated with the valve closing rate.

6. The vehicle refrigeration control method according to claim 4 or 5, wherein the opening degree control instruction comprises an upper limit value of an opening degree, and the refrigeration requirement level is positively correlated with the upper limit value of the opening degree.

7. The vehicle refrigeration control method according to claim 1, wherein the single-mode phase comprises a battery refrigeration mode, wherein determining the refrigeration mode to be entered according to the current refrigeration requirement level of the battery comprises:

entering the battery refrigeration mode and monitoring a cooling liquid temperature at a first position in real time, when the refrigeration requirement level is an emergency state, wherein the first position comprises an entrance of a battery cooling pipeline in a battery cooling circuit, and the battery cooling circuit is comprised in a cooling liquid circulation system;

entering the dual-mode phase, when a second temperature difference between the cooling liquid temperature and a second target temperature is less than or equal to a second temperature difference threshold, or a second running time of the battery refrigeration mode is greater than or equal to a second preset time.

8. The vehicle refrigeration control method according to claim 7, after entering the battery refrigeration mode, further comprising: determining control instructions of respective target control objects according to the refrigeration mode, wherein the target control objects comprise: a first electronic expansion valve, a second electronic expansion valve and a compressor;

correspondingly, determining the control instructions of respective target control objects according to the refrigeration mode comprises:

determining a fifth closed-loop control instruction of the compressor according to the cooling liquid temperature and a fifth closed-loop control model;

determining a sixth closed-loop control instruction of the first electronic expansion valve according to a supercooling degree of a second preset position and a sixth closed-loop control model, wherein the first electronic expansion valve is installed at a refrigerant input end of a multi-system heat exchanger, the multi-system heat exchanger is configured for heat exchange between a heat pump system and the cooling liquid circulation system, and the second preset position comprises the refrigerant input end;

determining a preset opening degree instruction of the second electronic expansion valve according to an air inlet temperature, a target air outlet temperature and an air volume of a blower, wherein the preset opening degree instruction is used for fixedly setting an opening degree of the second electronic expansion valve to be a preset opening degree, the air inlet temperature comprises a temperature of an air inlet side at a location where an internal heat exchanger is located, the target air outlet temperature is a preset temperature of an air outlet side at a location where the internal heat exchanger is located, and the second electronic expansion valve is installed at an input end of the internal heat exchanger.

9. The vehicle refrigeration control method according to claim 8, wherein determining the control instructions of the respective target control objects according to the refrigeration mode after entering the dual-mode phase, comprises: simultaneously monitoring the second temperature difference and a change rate of the cooling liquid temperature in real time to determine an opening degree adjustment instruction of the second electronic expansion valve, on the basis of the fifth closed-loop control instruction, the sixth closed-loop control instruction, and the preset opening degree instruction.

10. The vehicle refrigeration control method according to claim 9, wherein monitoring the second temperature difference and the change rate of the cooling liquid temperature in real time to determine the opening degree adjustment instruction of the second electronic expansion valve comprises: decreasing the opening degree of the second electronic expansion valve in a first preset manner, when the second temperature difference is greater than the second temperature difference threshold and the second temperature difference is less than or equal to a preset temperature difference upper limit, and the change rate is less than a first rate threshold.

11. The vehicle refrigeration control method according to claim 9 or 10, wherein monitoring the second temperature difference and the change rate of the cooling liquid temperature in real time to determine the opening degree adjustment instruction of the second electronic expansion valve comprises: keeping the opening degree of the second electronic expansion valve degree unchanged, when the change rate is greater than or equal to the first rate threshold and the change rate is less than a second rate threshold, and the second temperature difference is greater than the second temperature difference threshold, wherein the second rate threshold is greater than the first rate threshold.

12. The vehicle refrigeration control method according to any one of claims 9 to 11, wherein monitoring the second temperature difference and the change rate of the cooling liquid temperature in real time to determine the opening degree adjustment instruction of the second electronic expansion valve comprises:

increasing the opening degree of the second electronic expansion valve in a second preset manner, when the second temperature difference is greater than the second temperature difference threshold and the change rate is greater than or equal to a second rate threshold.

13. The vehicle refrigeration control method according to any one of claims 9 to 12, wherein monitoring the second temperature difference and the change rate of the cooling liquid temperature in real time to determine the opening degree adjustment instruction of the second electronic expansion valve comprises:
decreasing the opening degree of the second electronic expansion valve in a third preset manner, when the second temperature difference is greater than a preset temperature difference upper limit.

14. The vehicle refrigeration control method according to any one of claims 9 to 13, wherein monitoring the second temperature difference and the change rate of the cooling liquid temperature in real time to determine the opening degree adjustment instruction of the second electronic expansion valve comprises:
determining a seventh closed-loop control instruction of the second electronic expansion valve according to the second temperature difference and a seventh closed-loop control model, when the second temperature difference is less than or equal to the second temperature difference threshold.

15. The vehicle refrigeration control method according to any one of claims 9 to 13, further comprising:
if it is detected that the temperature of the battery is greater than or equal to a first temperature threshold, closing the second electronic expansion valve until the temperature of the battery is less than or equal to the second temperature threshold, and re-entering monitoring of a temperature difference between the cooling liquid temperature and the second target temperature and the change rate of the cooling liquid temperature in real time to determine the opening degree adjustment instruction of the second electronic expansion valve.

16. A vehicle refrigeration control apparatus, comprising:

a monitoring module, configured to monitor a temperature and a change rate of the temperature of a battery in a target vehicle in real time;
a processing module, configured to determine a refrigeration requirement level of the battery according to the temperature and the change rate;
the monitoring module is further configured to monitor refrigeration requirements for a passenger compartment and the battery of the target vehicle;
the processing module is further configured to determine a refrigeration mode to be entered according to a current refrigeration requirement level of the battery, when it is detected that there are the refrigeration requirements for the passenger compartment and the battery of the target vehicle at the same time;
wherein the refrigeration mode comprises: a single-mode phase and a dual-mode phase, the single-mode phase is used for refrigerating the passenger compartment or the battery alone, the dual-mode phase is used for simultaneously refrigerating the passenger compartment and the battery, and the single-mode phase is set to be prior to the dual-mode phase.

17. An electronic device, comprising: a processor, and a memory communicatively connected with the processor;

the memory stores computer-executable instructions;
the processor executes the computer-executable instructions stored in the memory to implement the vehicle refrigeration control method according to any one of claims 1 to 15.

18. A computer readable storage medium, wherein computer-executable instructions are stored in the computer readable storage medium, and when the computer-executable instructions are executed by a processor, the method according to any one of claims 1 to 15 is implemented.

19. A computer program product, comprising a computer program, when the computer program is executed by a processor, the method according to any one of claims 1 to 15 is implemented.

20. A computer program, comprising program codes, and when a computer runs the computer programs, the program codes execute the method according to any one of claims 1 to 15.

FIG. 1

| Monitoring a temperature and a change rate of the temperature of a battery in a target vehicle in real time | S201 |

| Determining a refrigeration requirement level of the battery according to the temperature and the change rate of the battery | S202 |

| Determining a refrigeration mode to be entered according to a current refrigeration requirement level of the battery, when it is detected that the passenger compartment and the battery of the target vehicle both have refrigeration requirements at the same time | S203 |

| Determining control instructions of respective target control objects according to the refrigeration mode | S204 |

FIG. 2

Entering the passenger compartment refrigeration mode and sending a close
instruction to a first electronic expansion valve, when it is detected that the
passenger compartment and the battery of the target vehicle both have
refrigeration requirements at the same time

S301

Determining a first closed-loop control instruction of a compressor according
to the first air outlet temperature and a first closed-loop control model

S302

Determining a second closed-loop control instruction of a second electronic
expansion valve according to a supercooling degree of a first preset position
and a second closed-loop control model

S303

Entering the dual-mode phase, when it is detected that a first temperature
difference between the first air outlet temperature and a first target
temperature is less than or equal to a first temperature difference threshold, or
a first running time of the passenger compartment refrigeration mode is
greater than or equal to a first preset time

S304

Determining an opening degree control instruction of the first electronic
expansion valve according to the refrigeration requirement level, the first air
outlet temperature, and the target temperature

S305

Determining a third closed-loop control instruction of the compressor
according to the first air outlet temperature and a third closed-loop control
mode

S306

Determining a fourth closed-loop control instruction of the second electronic
expansion valve according to a supercooling degree of the first preset
position and a fourth closed-loop control model

S307

FIG. 3

Entering the battery refrigeration mode and monitoring the cooling liquid temperature of the first position in real time, when it is detected that the passenger compartment and the battery of the target vehicle both have refrigeration requirements at the same time, and the refrigeration requirement level of the battery is an emergency state — S401

Determining a fifth closed-loop control instruction of the compressor according to the cooling liquid temperature and a fifth closed-loop control model — S402

Determining a sixth closed-loop control instruction of the first electronic expansion valve according to a supercooling degree of a second preset position and a sixth closed-loop control model — S403

Determining a preset opening degree instruction of the second electronic expansion valve according to an air inlet temperature, a target air outlet temperature and an air volume of a blower — S404

Entering the dual-mode phase, when it is detected that a second temperature difference between the cooling liquid temperature and a second target temperature is less than or equal to a second temperature difference threshold, or a second running time of the battery refrigeration mode is greater than or equal to a second preset time — S405

Simultaneously monitoring the second temperature difference and a change rate of the cooling liquid temperature in real time to determine an opening degree adjustment instruction of the second electronic expansion valve, on the basis of the fifth closed-loop control instruction, the sixth closed-loop control instruction, and the preset opening degree instruction — S406

FIG. 4

Vehicle refrigeration control Apparatus 500

Monitoring module — 501

Processing module — 502

FIG. 5

Electronic device 600

Processor — 601

— 603

Memory — 602

FIG. 6

## INTERNATIONAL SEARCH REPORT

| | |
|---|---|
| | International application No. |
| | **PCT/CN2021/127730** |

**A. CLASSIFICATION OF SUBJECT MATTER**

B60H 1/32(2006.01)i; B60H 1/00(2006.01)i; B60L 58/26(2019.01)i; H01M 10/613(2014.01)i; H01M 10/625(2014.01)i; F25B 49/02(2006.01)i; F24F 11/46(2018.01)i; F24F 5/00(2006.01)i

According to International Patent Classification (IPC) or to both national classification and IPC

**B. FIELDS SEARCHED**

Minimum documentation searched (classification system followed by classification symbols)

B60H1/-; H01M10/-; B60L58/-; F25B49/-; F24F11/-; F24F5/-

Documentation searched other than minimum documentation to the extent that such documents are included in the fields searched

Electronic data base consulted during the international search (name of data base and, where practicable, search terms used)

CNTXT, CNABS, CNKI, WPABS, DWPI, SIPOABS, ENTXT: 车辆制冷控制方法, 乘员舱, 电池, 温度, 变化率, 制冷需求等级, 优先, 紧急, 制冷模式, 单模式, 双模式, 制冷量, 分配, Vehicle Refrigeration Control Method, Occupant Compartment, Battery, Temperature, Rate of Change, Refrigeration Demand Level, Priority, Emergency, Refrigeration Mode, Single Mode, Dual Mode, Refrigeration Volume, Distribution

**C. DOCUMENTS CONSIDERED TO BE RELEVANT**

| Category* | Citation of document, with indication, where appropriate, of the relevant passages | Relevant to claim No. |
|---|---|---|
| A | CN 111497550 A (GUANGZHOU AUTOMOBILE GROUP CO., LTD.) 07 August 2020 (2020-08-07) description, specific embodiments, and figures 1-3 | 1-20 |
| A | CN 111251829 A (SHANGHAI OCEAN UNIVERSITY) 09 June 2020 (2020-06-09) entire document | 1-20 |
| A | CN 113263888 A (DONGFENG MOTOR GROUP CO., LTD.) 17 August 2021 (2021-08-17) entire document | 1-20 |
| A | CN 113525017 A (GUANGZHOU AUTOMOBILE GROUP CO., LTD.) 22 October 2021 (2021-10-22) entire document | 1-20 |
| A | CN 112622561 A (GREAT WALL MOTOR COMPANY LIMITED) 09 April 2021 (2021-04-09) entire document | 1-20 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2022** | **27 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/127730** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 109028676 A (ZHEJIANG GEELY HOLDING GROUP CO., LTD. et al.) 18 December 2018 (2018-12-18)<br>entire document | 1-20 |
| A | CN 112297776 A (MODERN AUTOMOBILE (YANCHENG) CO., LTD.) 02 February 2021 (2021-02-02)<br>entire document | 1-20 |
| A | WO 2020235261 A1 (SANDEN AUTOMOTIVE CLIMATE SYSTEMS CORP.) 26 November 2020 (2020-11-26)<br>entire document | 1-20 |
| A | US 2017317393 A1 (FORD GLOBAL TECHNOLOGIES, LLC) 02 November 2017 (2017-11-02)<br>entire document | 1-20 |
| A | JP 2021037855 A (DENSO CORP.) 11 March 2021 (2021-03-11)<br>entire document | 1-20 |

Form PCT/ISA/210 (second sheet) (January 2015)

**INTERNATIONAL SEARCH REPORT**
Information on patent family members

International application No.

**PCT/CN2021/127730**

| Patent document cited in search report | | | Publication date (day/month/year) | Patent family member(s) | | | Publication date (day/month/year) |
|---|---|---|---|---|---|---|---|
| CN | 111497550 | A | 07 August 2020 | None | | | |
| CN | 111251829 | A | 09 June 2020 | None | | | |
| CN | 113263888 | A | 17 August 2021 | None | | | |
| CN | 113525017 | A | 22 October 2021 | None | | | |
| CN | 112622561 | A | 09 April 2021 | None | | | |
| CN | 109028676 | A | 18 December 2018 | CN | 109028676 | B | 05 January 2021 |
| CN | 112297776 | A | 02 February 2021 | None | | | |
| WO | 2020235261 | A1 | 26 November 2020 | JP | 2020185969 | A | 19 November 2020 |
| US | 2017317393 | A1 | 02 November 2017 | CN | 107433870 | A | 05 December 2017 |
| | | | | US | 2019273294 | A1 | 05 September 2019 |
| | | | | DE | 102017108809 | A1 | 02 November 2017 |
| | | | | US | 10340563 | B2 | 02 July 2019 |
| | | | | US | 10601087 | B2 | 24 March 2020 |
| JP | 2021037855 | A | 11 March 2021 | None | | | |

Form PCT/ISA/210 (patent family annex) (January 2015)